# EUROPEAN PATENT SPECIFICATION

(11) **EP 0 671 978 B1**
(45) Date of publication and mention of the grant of the patent: **02.01.1997**
(21) Application number: 93920491.3
(22) Date of filing: 01.09.1993
(51) Int. Cl.: B01J 29/90, B01J 38/44, C10G 35/095

(54) **IMPROVED METHOD OF REGENERATING DEACTIVATED CATALYST**
VERFAHREN ZUM REGENERIEREN VON DESAKTIVIERTEM KATALYSATOR
PROCEDE AMELIORE DE REGENERATION D'UN CATALYSEUR DESACTIVE

(30) Priority: 04.09.1992 US 940579
(43) Date of publication of application: 20.09.1995
(73) Proprietor: EXXON RESEARCH AND ENGINEERING COMPANY, Florham Park, New Jersey 07932-0390 (US)
(72) Inventor: HUANG, Yao-Jyh, Robert, Houston, TX 77062 (US); FUNG, Shun, Chong, Bridgewater, NJ 08807 (US); McVICKER, Gary Brice, Califon, NJ 07830 (US); KAO, Jar-lin, Houston, TX 77058 (US); WALSH, John, Francis, Houston, TX 77005 (US); CLEM, Kenneth, Ray, Humble, TX 77346 (US)
(74) Representative: Bawden, Peter Charles
(86) International application number: PCT/US93/08407
(87) International publication number: WO 94/05418

(56) References cited:
- EP-A- 0 142 352
- EP-A- 0 334 562

## Description

### 1. Field of Invention

This invention relates to regenerating deactivated zeolite based catalysts and enhancing the activity of fresh zeolite based catalysts, particularly, but not exclusively, large pore zeolite catalysts such as zeolite L catalysts.

Compared to conventional alumina based reforming catalysts which are acidic and bifunctional, zeolite based catalysts such as zeolite L are non-acidic and monofunctional, which gives advantages in reforming light naphtha.

Zeolite based reforming catalysts deactivate and periodically must be regenerated to recover activity.

Catalytic reforming is a major petroleum refining process used to raise the octane rating of naphthas (C6 to C11 hydrocarbons) for gasoline blending. Catalytic reforming is also a principal source of aromatic chemicals, i.e., benzene, toluene and xylenes, via conversion of paraffins and naphthenes to aromatics.

The principal reforming chemical reactions are dehydrogenation of cyclohexane to aromatics, dehydrocyclization of paraffins to aromatics, dehydroisomerization of alkylcyclopentanes to aromatics, isomerization of normal paraffins to branched paraffins, dealkylation of alkylbenzenes, and hydrocracking of paraffins to light hydrocarbons. The hydrocracking of paraffins to light hydrocarbons is undesirable and should be minimized because light hydrocarbons have low value.

Reforming is typically carried out at temperatures of 426 to 538°C (800 to 1000°F), pressures of 0.34 to 20.7 Mpa (50 to 3000 psi), hourly weight space velocities of 0.5 to 3.0, and in the presence of hydrogen at molar ratios to feed of 1 to 10.

Other characteristics of reforming processes are well known in the art, and reference is made to US-A-4 914 068 for further teachings on this topic.

Catalysts currently used in commercial reformers include a Group VIII metal, such as platinum, or platinum plus a second catalytic metal, such as rhenium or iridium, dispersed on an alumina substrate. Typically, chlorine is incorporated on the alumina to add acid functionality. Alumina-based reforming catalysts are suitable for aromatizing C₈₊ paraffins, but are less effective for aromatizing C₆ to C₈ paraffins because these catalysts hydrocrack more of the lighter paraffins to low value fuel gas than they convert to aromatics.

Conventional commercial catalysts are bifunctional, i.e., the catalysts enhance i) dehydrogenation and cyclization reactions on the catalytic metal sites; and ii) isomerization on separate strong acid sites in the catalyst. The undesirable hydrocracking reactions also occur on the acid sites.

Within the past few years reforming catalysts have been developed which are effective for aromatizing the C₆ to C₈ paraffin components of naphtha. These catalysts are made using zeolite, rather than alumina, as the support for the catalytic metal. They are mono-functional and contain relatively few strong acid sites. Unlike conventional bifunctional catalysts, zeolite based catalysts accomplish dehydrogenation and cyclization reactions as well as isomerization on the dispersed metallic catalytic sites. Because these zeolite-based catalysts have few strong acid sites, undesirable hydrocracking reactions are repressed. Large pore zeolites are preferred for reforming catalysts, i.e. zeolites with a 6 to 15 Angstrom pore diameter. Suitable large pore zeolites for purposes of the present invention include zeolite X, Y, and L, with zeolite L being the most preferred support for reforming catalysts, particularly wherein the catalytically active metal is platinum.

For commercial reforming processes, zeolite catalysts are preferably formed into aggregates, such as extrudates or tablets, typically 0.08 to 0.65 cm in size to reduce pressure drop.

During reforming, catalysts deactivate due to accumulation of coke deposits in the catalyst, and agglomeration of the fine catalytic metal particles dispersed in the catalyst into larger particles. Therefore, it is common practice to periodically regenerate reforming catalysts to recover their activity. Unexpectedly, however, it was found that it is more difficult to regenerate the previously described zeolite-based reforming catalysts than the conventional alumina-based catalysts.

In general, such regeneration procedures include: 1) burning off the coke deposits using oxygen, 2) redispersing the active catalytic metals by oxyhalogenation using, for example, HCl, oxygen and water, 3) stripping excess halogen off the catalyst using first wet air, and then dry air as a stripping gas (oxygen post treating), and 4) reducing the dispersed catalytic metal using a reducing agent such as hydrogen.

In attempts to overcome problems experienced during regeneration of large-pore, zeolite-based reforming catalysts, various procedures have been developed.

FR-A-2,360,540 teaches that catalyst regeneration is improved by subjecting the catalyst after oxychlorination to a treatment with water and cooling air before the catalyst is reduced.

US-A-4 925 819 teaches a procedure for improving the activity and selectivity of deactivated type L zeolite-based catalysts by dispersing the catalytic metal throughout the pores or channels of the zeolite.

EP-A-0 142 352 is similarly directed to the process of regenerating a deactivated catalyst or enhancing the activity of a fresh catalyst and discloses that a wet nitrogen stripping step at temperatures no greater than about 450°C may be performed between the previously mentioned steps of post treating with oxygen and reducing with hydrogen.

US-A-4 914 068 discloses the advantages of a reduction step practiced at a temperature sufficiently lower than the chlorination or oxychlorination step and the benefits of cooling the catalyst in the presence of oxygen before the reduction.

Attention is directed to the above-mentioned US-A-4 925 819, US-A-4 914 068, EP-A-0 142 352 and FR-A 2360540 for extensive teachings on zeolite catalysts, reforming processes and catalyst regeneration techniques, all of which are applicable to performance of the present invention.

### SUMMARY OF THE INVENTION

According to the present invention there is provided a process for regenerating a deactivated or low activity reforming catalyst comprising a Group VIII catalytic metal and zeolite, which process comprises:
(a) burning coke off the catalyst by contacting the catalyst with a gaseous stream comprising inert gas and oxygen under oxidation conditions to substantially decoke the catalyst;
(b) halogenating the metal of the substantially decoked catalyst by contacting the catalyst with a gaseous stream comprising inert gas, oxygen, water and a source of halogen under oxyhalogenation conditions comprising a temperature of from 450°C to 550°C to halogen - complex and disperse the catalytic metal;
(c) removing at least some of the halogen from the metal by contacting the halogenated catalyst with a gaseous stream comprising inert gas and oxygen under halogen removal conditions at a temperature of from 300°C to 400°C and a total pressure not greater than 690 kPaa (100 psia), until the hydrogen halide in the gaseous stream after contact with the catalyst falls to a partial pressure below 20.7 Paa (0.003 psia); and
(d) reducing at least some of the halogen-complexed metal in the catalyst to the metallic state by contacting the halogenated catalyst from step (c) with a gaseous stream comprising hydrogen under reducing conditions at a total pressure not greater than 690 kPaa, (100 psia) until the hydrogen halide in the gas flow after contact with the catalyst falls to a partial pressure below 51.7 Paa (0.0075 psia).

This invention is distinguished and advantageous over the prior art in several respects. Thus EP-A-0 142 352 teaches a regeneration process wherein the steps corresponding to steps (b) and (c) of the invention are performed at the same temperature ranges. It has been found according to the instant invention that controlling the process conditions, including temperature, within certain specified ranges enables regeneration to occur in a commercially acceptable time without substantive damage to the catalyst. Example 1 of EP-A-0 142 352 teaches that performance of a wet O₂ post-treat step (corresponding to instant step (c)) on the product of an oxyhalogenation step (corresponding to instant step (b)), at 200°C or lower (instead of about 510°C), in accordance with FR-A-2360540, results in a worsening catalyst performance. Thus, EP-A-0 142 352 teaches away from performance of step (c) at a lower temperature than step (b).

In contrast, US-A-4 914 068 teaches that the performance of a Group VIII metal-containing catalyst, particularly a catalyst including a Group VIII metal on a large pore zeolite substrate such as zeolite L, can be materially improved by cooling the catalyst between the dispersion step (corresponding to instant step (b)) and the reduction step (corresponding to instant step (d)) of an activation or regeneration process while substantially maintaining the dispersion of the Group VIII metal, and conducting at least the initial portion of the reduction step at a relatively low temperature. Such cooling step may be corresponding to instant step (c). US-A-4 914 068 provides an excellent description of many of the aspects of catalyst regeneration which are equally applicable to the present invention. However, this prior art fails to identify or point the person of ordinary skill in the art towards the key parameters in the present invention which constitute surprising effect. These are that in addition to temperature, step (c) process conditions are controlled to a low total pressure not greater than 690 kPaa (100 psia), preferably not greater than 448 kPaa (65 psia), e.g., from sub-atmospheric to 448 kPaa (65 psia) and most preferably about atmospheric pressure; and to a partial pressure of hydrogen halide in the gaseous stream after contact with the catalyst, i.e., in the effluent gas, of less than 20.7 Paa (0.003 psia) preferably less than 13.8 Paa (0.002 psia), most preferably less than 10.3 Paa (0.0015 psia) and particularly less than 4.8 Paa (0.0007 psia).

US-A-4 914 068 teaches that the effluent gas stream from the step corresponding to instant step (c) should have an HC1 concentration of less than about 300 vppm, and desirably still lower (column 13); and is followed by a reduction step corresponding to instant step (d) with an effluent gas stream having an HC1 concentration preferably less than about 75 ppmv (column 14). It has now surprisingly been found that the key factor in the regeneration process is not hydrogen halide concentration on completion of step (c) and (d), but rather the hydrogen halide partial pressure. The teachings of US-A-4 914 068 all relate to processes at one atmosphere pressure, at which the preferred 300 vppm level corresponds to a partial pressure of 30.3 Paa (0.0044 psia). However, when the prior art process is performed at the more normal reforming and regeneration pressure range of 1.03 to 1.38 MPaa (150 to 200 psia) the preferred 300 vppm level equates to a hydrogen halide partial pressure of 310 Pa (0.045 psia).

Step (c) of the invention adopts temperature and pressure conditions which will result in the very low hydrogen halide partial pressure required in accordance with the invention, preferably less than 10.3 Paa (0.0015 psia). At these levels the driving force for hydrogen halide desorption, determined by the equilibrium between the metal halogen complex in the catalyst of step (c) and the hydrogen halide vapor, is such as to permit dehalogenation in commercially acceptable time periods. The alternative would be to run at normal regeneration pressure, under which condition extremely long periods would be needed to achieve the low hydrogen halide partial pressures, which long periods under regeneration conditions could damage the catalyst.

The halogen removed from the halogenated catalyst in step (c) is that which has become bound directly to the zeolite, and at least some of the halogen complexed to the metal atoms which have become dispersed over the zeolite during oxyhalogenation step (b). Removal of such complexed halogen is believed to fix the metal in dispersed positions. In addition it results in less hydrogen halide release during subsequent reduction, thus helping to reduce re-agglomeration during the reduction step. Here, the relatively low temperature of step (c) contributes to the regeneration efficiency by not promoting re-agglomeration of the metal.

The reduction step (d) of the invention is also performed at low total pressure not greater than 690 kPaa (100 psia), preferably not greater than 448 kPaa (65 psia), e.g. from sub-atmospheric to 448 kPaa (65 psia); so as to result in a hydrogen halide partial pressure in the effluent gaseous stream of less than 51.7 Paa (0.0075 psia). This low value permits hydrogen halide to escape as the metal is reduced, and so minimizes re-agglomeration. Step (d) is preferably performed at a temperature lower than step (b), more preferably from 300 to 400°C. The hydrogen partial pressure employed is preferably greater than 103 Paa (0.015 psia).

Preferably, the catalyst is a formed catalyst, more preferably in the form of tablets, pellets, spheres, and extrudates. The catalyst may include a binder material, preferably comprising kaolin, alumina, silica or mixtures of any two or more thereof to promote binding into aggregates. As used herein alumina binder materials include, but are not limited to, alkali and alkaline earth - containing alumina. The catalyst most preferably is monofunctional and non-acidic, and the zeolite is a large pore zeolite, which preferably is a type L zeolite. The type L zeolite preferably comprises exchangeable cations such as lithium, sodium, potassium, rubidium, cesium, calcium, barium, or mixtures of any two or more thereof. Potassium and/or barium are particularly preferred.

The Group VIII catalytic metal is preferably a noble metal such as platinum, palladium, rhodium, iridium, ruthenium or osmium, most preferably platinum. The amount of the Group VIII catalytic metal present is preferably from 0.05% to 6% by weight.

The catalytic metal may further comprise for example a Group VII B metal, preferably rhenium.

As used herein, the Groups are as presented in the Periodic Table in the Handbook of Chemistry & Physics, published by the Chemical Rubber Company, 48th edition.

The process of the present invention preferably comprises a linear gas velocity through the catalyst of at least 15.2 cm/sec (0.5 FPS). As mentioned, the concentrations of the gases used depend upon the operating pressure and are adjusted accordingly to yield a desired range of partial pressure of the gas component wherein $\text{the partial pressure of gas A = the concentration of A x the total pressure}$. In steps (a) and/or (b) the effluent gas, i.e., the gas stream from the outlet of the vessel containing the catalyst, is preferably recycled through the vessel containing the catalyst, rather than operating as a once-through process. In this case a portion of the effluent gas is preferably purged and replaced with fresh inert gas. The purge rate is typically from 5% to 30% of the recycle gas rate, preferably from 10 to 20%.

### DETAILED DESCRIPTION OF INVENTION

Preferred embodiments of the process of the invention are now discussed, with specific reference by way of example to chlorine as the halogen, and regeneration in the reactor wherein the catalyst has been employed in a hydrocarbon reforming process.

### Pre-Regeneration Reactor Purge (Optional)

The first step in the regeneration procedure is to purge hydrocarbons and then purge hydrogen remaining from hydrocarbon processing out of the reactor. This is done by establishing a flow of hydrogen to the reactor and continuing hydrogen flow until hydrocarbon is displaced by hydrogen. Then hydrogen flow is terminated, and a gas flow comprising inert gas, preferably nitrogen, is established through the catalyst bed and continued until hydrogen is displaced with inert gas. The gas flow is preferably substantially free of contaminates, such as ethylene, CO, and sulfur, and other substances which would be harmful or adversely affect the catalyst. The reactor may be purged in a similar manner between any of the subsequently described steps, to remove any gases from the reactor which might undergo a detrimental or adverse reaction if permitted to remain in the reactor during a subsequent step, such as oxygen and hydrogen.

Purging can be done over a wide range of conditions. Suitable pressures are from 101 kPaa (14.7 psia) to 2.07 MPaa (300 psia), preferably one atmosphere, and suitable temperatures are from 400°C to 500°C. The inert gas flow rate is preferably at least 15.2 cm/sec (0.5 FPS) linear gas velocity through the catalyst bed at operating pressure and temperature. This insures uniform gas flow distribution across the catalyst bed and effective gas/solid contacting for good purging action. Purging at these conditions for one to five hours adequately purges the reactor. The effluent gas, i.e., the gas stream from the outlet of the vessel containing the catalyst, may be recycled through the vessel containing the catalyst, rather than operating as a once-through process. In this case from 5 to 30% of the recycle gas is replaced with fresh inert gas.

### Coke Burn (Step (a) of Invention)

Coke which accumulates on the catalyst during hydrocarbon processing must be removed to regenerate the catalyst because catalytic performance of the regenerated catalyst is impaired if coke residues remain on the catalyst. Coke is removed by burning it off with oxygen, which term includes ozone which speeds up the coke burn. The partial pressure of oxygen in this gas stream during coke burn is preferably up to 69 kPaa (10 psia). However, care must be exercised to avoid exposing the catalyst to excessively high temperatures. Temperatures of from 400 to 550°C are preferably used. In another embodiment, halogen, such as HCl, can be included in this gas flow. The use of HC1 during coke burn can effectively remove the carbonaceous residues from the spent catalyst. This procedure dramatically reduces the coke burn temperature and minimizes the problems of local hot spots, the temperature run away, and the metal agglomeration. The coke burn is preferably conducted in two stages: a primary coke burn (a1) at less severe conditions followed by a secondary coke burn (a2) at more severe conditions. Thus, step (a) is preferably performed in a first stage (a1) and a second stage (a2), wherein (i) stage (a1) is performed at a lower temperature than stage (a2) and/or (ii) the gaseous stream of stage (a1) has a lower oxygen concentration than that of stage (a2), preferably where (a2) is performed for a longer time than (a1). The two-stage coke burn has been discovered to be advantageous in mitigating risk of exceeding zeolite decomposition temperature at the flame front. The coke burn is preferably conducted at a pressure of from sub-atmospheric to 2.07 MPaa (300 psia) or 1.38 MPaa (200 psia), with a pressure of 345 kPaa (50 psia) to 1.38 MPaa (200 psia), e.g., 1.28 MPaa (185 psia) being more preferred. Gas flow rate to the reactor is preferably set to maintain at least 15.2 cm/sec (0.5 FPS) linear gas velocity through the catalyst.

The primary coke burn is initiated by injecting oxygen, ozone, or air into the inert gas flowing to the reactors. The inlet gas temperature is preferably from 400°C to 500°C, more preferably from 400°C to 480°C, and most preferably about 445°C. The oxygen concentration in the reactor inlet gas is preferably adjusted to from 500 vppm to 6000 vppm, more preferably from 1000 vppm to 4000 ppm. A low concentration of oxygen is used in the primary coke burn to avoid excessively high temperature, because of adiabatic coke burn condition. Under adiabatic coke burn, the increase in the flame front temperature depends solely on oxygen concentration regardless of total pressure. Higher oxygen concentration can be used in the primary coke burn when the coke burn is not carried out at the adiabatic condition, e.g. an external cooling to the reactor is available or a higher heat capacity inert gas other than nitrogen is used. During the primary coke burn the gas flow may be essentially devoid of water or include an amount of water, e.g., to a water partial pressure of up to 20.7 kPaa (3 psia). Thus, the gas stream during coke burn preferably has a partial pressure of water of 0 to 20.7 kPaa (3 psia), more preferably of 0 to 13.8 kPaa (2 psia), and most preferably of 0 to 6.9 kPaa (1 psia). At these conditions the temperature of the catalyst is maintained safely below catalyst decomposition temperature at a most preferred pressure of about 1.28 MPaa (185 psia). CO₂ and oxygen concentration in the reactor outlet gas stream are continuously measured to determine when the primary coke burn is completed, i.e., when molar ratio of CO₂ to O₂ falls below a preferred threshold ratio of 3:1, which occurs typically about two to fifty hours into the burn. The time to complete the primary coke burn step varies with the concentration of coke on catalyst, space velocity, and oxygen concentration in the reactor inlet gas.

Then transition into the secondary coke burn step (a2) is begun. Gas inlet temperature is preferably raised at a rate of about 25 to 50 degrees C per hour to the secondary coke burn temperature which is preferably from 500°C to 550°C, more preferably from 500°C to 520°C, and most preferably at about 510°C, at a most preferred pressure of 1.28 MPaa (185 psia). Simultaneously, oxygen partial pressure is raised to a preferred secondary coke burn level, e.g., up to 69 kPaa (10 psia), more preferably from 690 Paa (0.1 psia) to 55 kPaa (8 psia), and most preferably from 13.8 kPaa (2 psia) to 48.3 kPaa (7 psia). In the secondary coke burn, water may be present for example at a partial pressure up to 20.7 kPaa (3 psia), preferably up to 13.8 kPaa (2 psia), and more preferably up to 6.9 kPaa (1 psia). However, most preferably the gas flow is essentially devoid of water and has a water partial pressure of 0.

The secondary coke burn (or single coke burn, if only one stage is used) is continued until the CO₂ partial pressure in the outlet gas from the reactor falls below a preferred level of 69 kPaa (0.01 psia), and more preferably 27.6 Paa (0.004 psia); this typically occurs about 12 hours into the secondary burn, depending on the amount of catalyst in the reactor. It has been discovered that the activity of regenerated catalyst is impaired if the coke burn is terminated prematurely, i.e., before CO₂ partial pressure falls below 27.6 Paa (0.004 psia) to 69 Paa (0.01 psia).

During coke burn, the gas stream is preferably recycled or recirculated from the tail reactor to the lead reactor, where a series of two or more reactors is used, in order to conserve nitrogen of the inert carrier gas by employing an in-line recycle gas compressor. Preferably, about 10% of the recycle gas flow is purged with the fresh coke burn gas prior to recirculating the stream.

### Pre-Oxychlorination Hydrogen Reduction (Optional Step (a'))

Regenerated catalyst activity is higher when the catalyst is exposed to hydrogen after coke burn, but before oxychlorination (b). Thus, in a preferred embodiment between steps (a) and (b) there is performed an intermediate reducing step (a') comprising contacting the substantially decoked catalyst with a gaseous stream comprising inert gas and hydrogen under reducing conditions for a time effective to reduce the metal component of the catalyst to the metallic state. Step (a') is preferably performed at a hydrogen partial pressure greater than 103 Paa (0.015 psia) and/or a temperature of from 300 to 550°C and/or a total pressure not greater than 20.7 MPaa (300 psia) and/or with the additional presence of water in the gaseous stream.

As previously discussed, before hydrogen is introduced, oxygen remaining in the reactor after the coke burn must be purged from the reactor to preclude forming combustible mixtures of hydrogen and oxygen, e.g., by cutting off oxygen flow and continuing nitrogen flow through the reactors, e.g., from 30 minutes to several hours at a temperature of about 510° C and at a pressure of from 101 kPaa (14.7 psia) to 2.07 MPaa (300 psia), to reduce oxygen concentration to a safe level; the nitrogen linear velocity is preferably maintained in the catalyst beds at at least 15.2 cm/sec (0.5 FPS) to achieve adequate gas distribution and gas/solid contacting.

Hydrogen reduction is initiated by starting flow of hydrogen into the nitrogen flowing into the reactors. Conditions for hydrogen reduction step (a') can be varied over a wide range. Hydrogen partial pressure is preferably greater than 103 Paa (0.015 psia), more preferably from 103 Paa (0.015 psia) to 101 kPaa (14.7 psia), most preferably from 1.03 kPaa (0.15 psia) to 34.5 kPaa (5 psia), and particularly between 2.76 kPaa (0.4 psia) and 6.9 kPaa (1 psia). Total pressure is e.g. from 101 kPaa (14.7 psia) to 2.07 MPaa (300 psia), preferably to 1.38 MPaa (200 psia), more preferably to 448 kPaa (65 psia), and most preferably at about one atmosphere. Temperatures of from 300°C to 550°C are satisfactory, with 450°C to 530°C being preferred, 480°C to 520°C being more preferred, and about 510°C most preferred. Linear gas velocity through the catalyst beds should achieve uniform gas distribution and effective gas/solid contacting with the catalyst. In an axial adiabatic reactor the gas flow is preferably at least 15.2 cm/sec (0.5 FPS). Reduction time of up to 5 hrs is normally adequate with 30 minutes to 2 hrs being preferred.

Water can be introduced to the reactor (a'), e.g., inlet gas stream during preoxyhalogenation reduction step to yield water partial pressure of up to 6.9 kPaa (1 psia), 13.8 kPaa (2 psia) or 20.7 kPaa (3 psia), although it is most preferred that the gas stream be essentially devoid of water.

After completing hydrogen reduction step (a'), hydrogen flow is cut off and inert gas flow is continued to purge hydrogen so that oxygen required in the next step can be safely introduced. The purge can be done over a wide range of conditions; for example, passing inert gas through the catalyst at about one atmosphere to 2.07 MPaa (300 psia) at a temperature of from 300°C to 550°C at a gas flow rate above 15.2 cm/sec (0.5 FPS) for about 30 minutes to several hours adequately clears hydrogen.

In this hydrogen reduction step (a'), as well as the coke burn step (a), wherein the gas is recycled (except for the amount eg 10% purged), hydrogen can be also recycled. This hydrogen reduction step is most preferably performed in once through manner and at atmospheric pressure.

### Pre-Oxychlorination Conditioning (Optional Step (a''))

The activity of regenerated catalyst is increased by exposing the catalyst to water and oxygen prior to oxychlorination. Thus, according to a preferred embodiment, between steps (a) and (b) there is performed a catalyst conditioning step (a'') comprising contacting the catalyst with a gaseous stream comprising inert gas, oxygen and water under conditions and for a time to saturate the catalyst with water and form a substantially water saturated catalyst. Preferably, the substantially saturated catalyst has a moisture content in equilibrium with the gaseous stream of step (a''). Step (a'') is preferably performed at a temperature of from 300 to 540°C and/or a water partial pressure not greater than 20.7 kPaa (3 psia) and/or an oxygen partial pressure not greater than 69 kPaa (10 psia) and/or a total pressure not greater than 2.07 MPaa (300 psia).

This treatment saturates the catalyst with water and oxidizes metals in the catalyst. The amount of water adsorbed by the oxide support of the catalyst depends on the partial pressure of water in the gas phase. During the reduction step (a'), which is optionally carried out after the coke burn step (a), the amount of water on the catalyst may not be at the right condition since water partial pressure may be too low in the reduction step. The water partial pressure is increased by injecting water into the reactor in the post chlorination conditioning step (a'') so that the oxide support can acquire the equilibrated amount of adsorbed water under the specified water partial pressure. Wetting the catalyst, preferably to saturation prior to initiating oxychlorination avoids exposing dry catalyst to chlorine at oxychlorination conditions which has been discovered to impair activity of regenerated catalyst.

Pre-oxychlorination conditioning step (a'') may be carried out at a pressure of atmospheric to 2.07 MPaa (300 psia), preferably to 1.38 MPaa (200 psia), more preferably of 345 kPaa (50 psia) to 1.38 MPaa (200 psia), and most preferably at about 1.28 MPaa (185 psia), and temperatures of from 300°C to 540°C, with temperatures of 500°C to 530°C being preferred, and a temperature of about 510°C being most preferred. Water partial pressure may be, e.g., up to 20.7 kPaa (3.0 psia), preferably to 13.8 kPaa (2 psia), more preferably between 1.38 kPaa (0.2 psia) and 13.8 kPaa (2 psia) and most preferably at about 6.9 kPaa (1 psia); oxygen partial pressure may be, e.g., up to 69 kPaa (10 psia), with 69 kPaa (10 psia) to 34.5 kPaa (5 psia) being preferred, and with 6.9 kPaa (1 psia) to 13.8 kPaa (2 psia) being more preferred. Gas linear velocity through the catalyst beds is preferably maintained above 15.2 cm/sec (0.5 FPS) at operating pressure and temperature. Flow of the gas stream containing inert gas, oxygen and water is preferably continued for an additional 2 hours after water partial pressure in the reactor outlet stream exceeds about 5.24 kPaa (0.76 psia) and preferably for up to about 90 minutes longer to insure that the catalyst is saturated with water at the water partial pressure employed and that metals are completely oxidized.

### Oxyhalogenation (Step (b) of Invention)

The catalytic metals at this point in the regeneration procedure are typically agglomerated. Metal halide (chloride) molecules are mobile and disperse across the zeolite surfaces with facility. In step (b), the metals are halogenated (chlorinated) by exposure to oxygen, water and a source of halogen (chlorine) all in an inert carrier gas. Preferably the source of halogen in step (b) is a source of chlorine, such as Cl₂, HCl, chlorinated hydrocarbons, such as carbon tetrachloride and mixtures of two or more thereof, most preferably HCl.

Oxyhalogenation is for example carried out at a pressure of about atmospheric to 2.07 MPaa (300 psia), preferably to 1.38 MPaa (200 psia), more preferably from 345 kPaa (50 psia) to 1.38 MPaa (200 psia), and most preferably at about 1.28 MPaa (185 psia). Oxychlorination temperatures are for example from 480°C to 550°C, preferably 500°C to 530°C, and most preferably at about 510°C. Inert gas flow rate is preferably adjusted to make the linear gas velocity in the reactors above 15.2 cm/sec (0.5 FPS) at operating pressure and temperature. HCl is a preferred chlorine source because HCl converts to chlorine by reaction with oxygen via the Deacon reaction so chlorine is really the active chlorinating agent. Water partial pressure in the reactor inlet gas is for example up to 20.7 kPaa (3.0 psia), preferably to 13.8 kPaa (2 psia), and most preferably from 1.38 kPaa (0.2 psia) to 13.8 kPaa (2 psia). Oxygen partial pressure is for example up to 69 kPaa (10 psia), preferably from 6.9 kPaa (1 psia) to 34.5 kPaa (5 psia), and more preferably from 6.9 kPaa (1 psia) to 13.8 kPaa (2 psia). Halogen source (HCl) partial pressure in the reactor inlet gas is for example up to 3.45 kPaa (0.5 psia), preferably from 138 Paa (0.02 psia) to 3.45 kPaa (0.5 psia), and more preferably from 138 Paa (0.02 psia) to 2.07 kPaa (0.3 psia), and most preferably from 138 Paa (0.02 psia) to 1.38 kPaa (0.2 psia).

Completion of oxychlorination step (b) is signaled by appearance of chlorine and HCl, referred to herein as chlorine breakthrough, in the reactor effluent gas at a partial pressure preferably greater than 69 Paa (0.01 psia). Time to chlorine breakthrough after initiation of HCl flow is proportional to the chlorine feed rate and is inversely proportional to the amount of catalyst in the reactors; it typically takes from 2 to 6 hours.

After chlorine breakthrough, oxychlorination is preferably continued for an additional time period of up to 6 hours, preferably for from 2 hours to 5 hours.

In a manner similar to coke burn step (a), the gas stream from (b) may be recycled, i.e., recirculated, from the tail reactor to the lead reactor, where a series of two or more reactors is used, in order to conserve nitrogen of the inert carrier gas by employing an in-line recycle gas compressor. Preferably, about 10% of the recycle gas flow is purged with the purged amount being replaced with fresh oxychlorination gas prior to recirculating the stream.

### Post Oxychlorination Cool Down(Optional Step (b'))

Higher regenerated catalyst activity is obtained when the post oxychlorination steps are conducted at lower temperature, i.e., within the range of 300°C to 400°C, and preferably at about 345°C, than the oxychlorination temperature which is from 450°C to 550° C. Preferably, the catalyst is cooled from oxychlorination temperature to a lower post treat temperature prior to oxychlorination post treatment. Thus, in this embodiment, between steps (b) and (c) there is performed a cooling step (b') comprising contacting the oxyhalogenated catalyst of step (b) with a gaseous stream comprising inert gas and/or oxygen and/or water and/or a source of halogen, preferably the gaseous stream of step (b), which gaseous stream is at a temperature effective to reduce the temperature of the catalyst to a value of from 300 to 400 °C. Preferably the cooling is done under an oxychlorination atmosphere to prevent premature reduction and agglomeration of catalytic metals. In this embodiment of the present invention, cool down is accomplished by continuing the flow of oxychlorination feed gas, for example having a HCl partial pressure of up to 3.45 kPaa (0.5 psia), preferably from 138 Paa (0.02 psia) to 3.45 kPaa (0.5 psia), more preferably 138 Paa (0.02 psia) to 2.07 kPaa (0.3 psia), and most preferably 138 Paa (0.02 psia) and 1.38 kPaa (0.2 psia). Alternatively, a gas which is essentially devoid of HCl can be used in this stage while reducing the temperature. The time required to cool the catalyst down to such lower temperatures, however, depends on the characteristics of the equipment in the plant and the temperature drop specified. Cool down does not impair regenerated catalyst performance when done under an oxychlorination atmosphere.

### Post-Oxychlorination Stripping (Step (c) of Invention)

It has been discovered that it is beneficial to regenerated catalyst activity to remove halogen (chlorine) from the catalyst prior to the final reduction, and that the more chlorine removed before the final hydrogen reduction, the higher the activity of the regenerated catalyst. Essential and preferred conditions for step (c), and the reasons therefore, are discussed hereinbefore. Step (c) is preferably accomplished by exposing the catalyst to a stream of inert gas containing oxygen at the lowest pressure, i.e., atmospheric pressure or even vacuum, which can be used depending on the circumstances. However, pressures as high as 448 kPaa (65 psia), and preferably at about atmospheric may be used in certain situations. Temperature during this stripping step is from 300°C to 400°C, with 345°C being preferred. Water may be present in the treat gas during stripping step (c), for example at a partial pressure of up to 20.7 kPaa (3 psia), preferably up to 13.8 kPaa (2 psia), more preferably 69 Paa (0.01 psia) to 6.9 kPaa (1 psia), and most preferably 1.38 kPaa (0.2 psia) to 4.14 kPaa (0.6 psia). Where water is included in the gas flow, the stripping is referred to herein as a wet stripping. Oxygen partial pressure in step (c) is for example up to 31 kPaa (4.5 psia), preferably up to 20.7 kPaa (3 psia), and more preferably 4.83 kPaa (0.7 psia) to 20.7 kPaa (3 psia). The inert gas flow rate during this stripping step is preferably fixed to maintain at least 15.2 cm/sec (0.5 FPS) linear gas velocity through the catalyst beds.

Wet stripping in the previously described manner is continued until HCl partial pressure in the reactor effluent, i.e., exhaust HCl partial pressure, falls below 27.6Paa (0.004 psia), preferably below 10.3 Paa (0.0015 psia) and more preferably below 4.8 Paa (0.0007 psia); exhaust HCl partial pressure in this range signals that chlorine concentration on the catalyst is acceptably low. Typically, exhaust HCl partial pressure falls into the 27.6 Paa (0.004 psia) to 4.8 Paa (0.0007 psia) range after 2 to 12 hours of wet stripping treatment.

Optionally, water flow may be then discontinued and the flow of inert gas and oxygen continued for about one hour to dry the system to prepare for the subsequent hydrogen reduction. The water partial pressure at the reactor outlet is then preferably less than 27.6 Paa (0.004 psia), more preferably less than 20.6 Paa (0.003 psia), and most preferably less than 10.3 Paa (0.0015 psia). In this embodiment, oxygen flow is cut off and inert gas flow is continued for about one hour to purge oxygen out of the reactor system prior to introducing hydrogen.

Alternatively, the stripping or soaking can be performed with a substantially dry gas stream having a partial pressure of water of essentially zero.

As in the hydrogen reduction step, these stripping steps, which are most preferably performed at atmospheric pressure, use once-through gas, which is then exhausted or purged from the outlet of the reactor vessel. In a reactor train, the gas would be purged or exhausted from the downstream tail reactor. Alternatively, this step can be performed using recycle gas at a pressure up to 448 kPaa (65 psia).

### Final Hydrogen Reduction (Step (d) of Invention)

The final step in the regeneration procedure is to reduce the catalytic metals, which at this point are dispersed in the zeolite as chloride molecules, to their zero valent metallic state without substantial agglomeration. Preferably a gaseous stream comprising inert gas which is substantially devoid of oxygen is passed for a time sufficient to lower oxygen partial pressure to below 138 Paa (0.02 psia) so as to avoid formation of an explosive mixture when hydrogen is added. Then reduction in accordance with the present invention is accomplished by introducing hydrogen, for example, at a partial pressure greater than 103 Paa (0.015 psia), preferably 103 Paa (0.015 psia) to 101 kPaa (14.7 psia), more preferably 1.03 kPaa (0.15 psia) to 34.5 kPaa (5 psia), and most preferably 6.9 kPaa (1 psia) to 20.7 kPaa (3 psia), into the inert gas flowing to the reactors, which induces rapid evolution of hydrogen halide into the treat gas. However, towards the end of this step a gas flow which is essentially 100% hydrogen could be used, making the inert gas optional. Thus, hydrogen halide, e.g., HCl partial pressure rises as the reduction treat gas, in this step the inert gas including hydrogen, moves downstream through the catalyst. Initially (first few minutes of reduction) a high level of hydrogen halide is released and moves rapidly through the catalyst bed. After this wave of hydrogen halide, it is desirable to minimize hydrogen halide partial pressure, preferably to less than 138 Paa (0.02 psia). This step is continued until an endpoint HCl partial pressure at the reactor outlet is less than 51.7 Paa (0.0075 psia). It has been discovered that reactions between HCl and unreduced catalyst downstream of the reaction front impair regenerated catalyst activity. Accordingly, the reduction is conducted to minimize the interaction between HCl and unreduced catalyst. In order to minimize these undesirable reactions, reduction is preferably performed at low temperature relative to oxychlorination step (b) temperature, for example, at a temperature of 300°C to 400°C, and preferably at about 345°C. Also, reduction is performed at low pressure, preferably at the lowest practicable pressure, i.e., about atmospheric pressure, and hydrogen addition rate is controlled to minimize hydrogen halide partial pressure throughout the reduction. Gas velocity through the catalyst bed is preferably maintained at above 15.2 cm/sec (0.5 FPS) for good gas contacting. Reduction time of one to seven hours has been discovered to be suitable for insuring complete reduction, with up to six hours being preferred.

As in the previous reduction step, this stage of hydrogen reduction, which is most preferably performed at atmospheric pressure, uses once-through hydrogen with nitrogen as the inert carrier gas, which is then purged downstream of the tail reactor. Alternatively, this step can be performed using recycled hydrogen and nitrogen for example at a pressure up to 448 kPaa (65 psia).

An alternative of the steps after wet post-oxychlorination stripping is to purge the catalyst with wet nitrogen and follow by wet hydrogen reduction. In this case, water is present, for example at a partial pressure at the reactor inlet up to 20.7 kPaa (3 psia), preferably to 13.8 kPaa (2 psia), more preferably 69 Paa (0.01 psia) to 6.9 kPaa (1 psia), and most preferably 1.38 kPaa (0.2 psia) to 4.14 kPaa (0.6 psia). However, the catalyst has to be dried out after wet reduction, before introducing hydrocarbon feed into the reactor, for example to a water partial pressure less than 27.6 Paa (0.004 psia), preferably less than 20.7 Paa (0.003 psia), and more preferably less than 10.3 Paa (0.0015 psia).

### EXAMPLES

The following examples illustrate the invention.

### EXAMPLE I

The catalyst used was an extrudate of zeolite L bound with alumina containing 0.64 wt. % platinum. The catalyst was run at reforming conditions. It contained 1 wt. % coke when the reforming run was terminated. The catalyst was regenerated at 1.27 MPaa (185 psia) using the following procedural stages. Linear gas velocity through the catalyst was 15.2 cm/sec (0.5 fps) and the inert carrier gas was nitrogen:
1. Coke burn step (a1) at 445°C for two hours with 1 vol. % oxygen, (12.8 kPaa/1.85 psia partial pressure).
2. Coke burn step (a2) at 510°C for 14 hours with 3 vol% oxygen (38.3 kPaa/5.55 psia partial pressure).
3. Oxychlorination step (b) at 510°C for three hours with 600 vppm HCl, 0.66 vol. % water vapor, and 0.84 vol. % oxygen.
4. Cool down step (b) to 345°C over four hours under oxychlorination atmosphere.
5. Stripping step for three hours with 0.66 vol. % water vapor and 0.84 vol. % oxygen, to an HCl partial pressure of 447 Paa (0.0648 psia).
6. Stripping step with 0.84 vol. % oxygen for one hour.
7. Purge with nitrogen for one hour.
8. Reduction step with 0.2 vol. % hydrogen for 2.5 hours to an HCl partial pressure of which fell from a value of 510 Paa (0.074 psia) immediately after the initial HCl wave, to a final value of 76.5 Paa (0.0111 psia).

The catalyst regenerated with this procedure (outside the scope of the invention) is designated as Catalyst A. A sample of the same catalyst was regenerated using the steps 1 through 4; followed by steps 5 through 8 which were modified as follows:
5a. Stripping step (c) at 345°C with 10 vol. % oxygen and 3 vol. % water in nitrogen at atmospheric pressure for three hours to an HCl partial pressure of 3.0 Paa (0.00044 psia).
6a. Stripping step (c) at 345°C with 10 vol. % oxygen in nitrogen for one hour at atmospheric pressure.
7a. Purge with nitrogen for one hour at atmospheric pressure.
8a. Reduce with hydrogen 10 vol. % for 2.5 hours at atmospheric pressure to an HCl partial pressure of which fell from a value of 75.8 Paa (0.011 psia) immediately after the HCl initial wave, to a final value of 6.0 Paa (0.00088 psia).

The catalyst regenerated with this modified procedure according to the invention is designated as Catalyst B. The activity of Catalyst A and B was compared by running both at reforming conditions for 46 hours and then determining their benzene yield and selectivities. The test conditions were: 510°C; 8 weight hourly space velocity (whsv); 738 kPaa (107 psia); 4.25 hydrogen to oil molar ratio; on a feed comprising 40 wt. % normal hexane and 60 wt. % 3 methylpentane.

| CATALYST | Bz YIELD. WT. % | Bz SELECTIVITY WT. % |
|---|---|---|
| A | 26 | 64 |
| B | 34 | 69 |

This example shows that if the post oxychlorination stripping step is done at low (atmospheric) pressure rather than at the higher (conventional) oxychlorination pressure (1.27 MPaa), thus enabling a hydrogen halide partial pressure in the step (c) effluent gas of less than 27.6 Paa (0.004 psia), especially less than 10.3 Paa (0.0015 psia), the activity and selectivity of the regenerated catalyst is significantly higher.

### Example II

The catalyst of Example I was subjected to a regeneration procedure entirely performed at atmospheric pressure. The linear velocity of gas flowing through the reactor was 15.2 cm/sec (0.5 fps) and the inert carrier gas was nitrogen.

The catalyst was dried under flowing nitrogen at 250°C for 12 hours. The catalyst was coke burned (step (a1)) at 445°C with 2.6 vol. % oxygen in nitrogen for two hours and then (step (a2)) at 510°C with 20 vol. % oxygen for 22 hours. Oxygen was purged from the reactor by cutting off oxygen flow and continuing nitrogen flow for 30 minutes.

The catalyst was reduced (step (a')) by passing hydrogen over it at 510°C for one hour. Hydrogen was purged from the reactor by passing nitrogen through the reactor for thirty minutes.

Platinum in the catalyst was redispersed (step (b)) with a gas containing 0.3 vol. % HCl, 3.4 vol. % water vapor, and 10 vol. % oxygen at 510°C for six hours. Temperature was reduced (step (b')) to 345°C. The catalyst was stripped to less than the minimum detectable level of 3.0 Paa (0.00044 psia), of residual HCl (step (c)) with air containing 3.4 vol. % water vapor at 345°C for one hour. Air was purged from the reactor with nitrogen and the catalyst was reduced (step (d)) with a gas stream containing 20 vol. % hydrogen in nitrogen at 345°C for one hour to an HCl partial pressure of less than 3.0 Paa (0.00044 psia). This regenerated catalyst is designated Catalyst C.

The experiment was repeated with another three gram sample of the coked catalyst except that the catalyst was not reduced with hydrogen (step (a')) after the coke burn (step (a1) and (a2)). The catalyst regenerated without preoxychlorination hydrogen reduction is designated Catalyst D.

Catalyst C and D, each regenerated according to the invention, were tested for reforming activity and benzene selectivity by the method described in Example I.

| CATALYST | Bz YIELD. WT. % | Bz SELECTIVITY WT. % |
|---|---|---|
| C | 33.7 | 68 |
| D | 25.5 | 64 |

The activity and selectivity of catalyst C which was reduced with hydrogen after coke burn and before oxychlorination was significantly higher than that of catalyst D.

### Example III

This example shows that preoxychlorination reduction with hydrogen (step (a')) after coke burn (step (a)), and post oxychlorination stripping (step (c)) at low (atmospheric) pressure rather than at oxychlorination (step (b)) pressure 1.20 MPaa (175 psia) improves recovery of activity and selectivity. The deactivated catalyst of Example I was regenerated using the following procedure:

The catalyst was coke burned (a1) at 450°C and 1.20 MPaa (175 psia) for 10 hours with 0.2 vol. % oxygen in nitrogen. Linear gas velocity was maintained at 15.2 cm/sec for the entire regeneration procedure. The coke burn was completed (a2) at 510°C and 175 psia. The catalyst was oxychlorinated (b) to redisperse platinum by adding 0.15 vol. % HCl to the gas stream flowing into the reactor for 4.5 hours. Then, the catalyst was cooled (b') from 510°C to 345°C while continuing the flow of the HCl/oxygen/nitrogen oxychlorination gas mixture. The catalyst was then stripped (c) at 1.17 MPaa (170 psia) and 345° C by passing a gas stream containing 0.87 vol. % oxygen and 0.84 vol. % water vapor in nitrogen through the catalyst. Stripping was completed by cutting off water vapor flow and continuing flow of the oxygen in nitrogen stream at 1.17 MPaa (170 psia) and 345°C for one more hour. Oxygen flow was cut off and nitrogen flow was continued to purge oxygen out of the reactor system. Then the catalyst was reduced by passing 2 vol. % hydrogen in nitrogen at 345°C and 1.17 MPaa (170 psia) through the catalyst for two hours. This regenerated catalyst is designated E (not in accordance with the invention).

The same deactivated catalyst was regenerated using the preferred procedure of the invention. The catalyst was coke burned (a1) at 450°C and 1.17 MPaa (170 psia) with 0.2 vol. % oxygen in nitrogen for 10 hours and then (a2) at 510°C with 3.5 vol. % oxygen for 16 hours. Linear gas velocity through the catalyst was 15.2 cm/sec throughout the regeneration procedure and the inert carrier gas was nitrogen. Oxygen was purged out of the reactor system by continuing nitrogen flow after cutting off oxygen and then the catalyst was reduced (a') with 50% hydrogen in nitrogen at 510°C for one hour. Hydrogen was purged out of the reactor system by continuing nitrogen flow after cutting off hydrogen and then the catalyst was preconditioned (a'') for oxychlorination by treating it with 0.89 vol. % oxygen and 0.87 vol. % water vapor at 510°C and 1.20 MPaa (175 psia). The catalyst was oxychlorinated (b) to redisperse platinum by adding 0.15 vol. % HCl to the carrier gas stream. The catalyst was stripped (c) at 345°C at atmospheric pressure with a gas stream containing 5 vol. % oxygen and 0.84 vol. % water vapor for eight hours to an HCl partial pressure of 10.3 Paa (0.0015 psia). Water vapor flow was cut off and the catalyst treated with dry oxygen in nitrogen mixture for two hours. Oxygen was purged out of the system by continuing nitrogen flow for two hours. Finally, the catalyst was reduced (d) at 345°C with 7 vol. % hydrogen in nitrogen for six hours to an HCl partial pressure of 7.6 Paa (0.0011 psia). This regenerated catalyst, designated F, is regenerated according to the invention.

Catalyst F exhibited 30% higher activity and selectivity for aromatizing hexane streams to benzene than did Catalyst E, when subjected to the test described in Example I.

As evidenced by the Examples, the process of the invention is one which preferably will regenerate a catalyst after use in reforming processes, to a benzene activity which is at least 25 percent greater than the activity of an equivalently coked catalyst that has been regenerated by a conventional procedure not including the parameters specified for steps (c) and (d). The process of the invention is also effective to increase the activity of fresh catalyst which has not yet been subjected to reforming reactions, preferably to a benzene activity amounting to a weight percent benzene yield which is at least 1.5 wt% greater than the untreated, low activity catalyst. In each case, the activity test employed is as described in Example I.

## Claims

1. A process for regenerating a deactivated or low activity reforming catalyst comprising a Group VIII catalytic metal and zeolite, which process comprises:
(a) burning coke off the catalyst by contacting the catalyst with a gaseous stream comprising inert gas and oxygen under oxidation conditions to substantially decoke the catalyst;
(b) halogenating the metal of the substantially decoked catalyst by contacting the catalyst with a gaseous stream comprising inert gas, oxygen, water and a source of halogen under oxyhalogenation conditions comprising a temperature of from 450°C to 550°C to halogen - complex and disperse the catalytic metal;
(c) removing at least some of the halogen from the metal by contacting the halogenated catalyst with a gaseous stream comprising inert gas and oxygen under halogen removal conditions at a temperature of from 300 °C to 400°C and a total pressure not greater than 690 kPaa (100 psia), until the hydrogen halide in the gaseous stream after contact with the catalyst falls to a partial pressure below 20.7 Paa (0.003 psia); and
(d) reducing at least some of the halogen-complexed metal in the catalyst to the metallic state by contacting the halogenated catalyst from step (c) with a gaseous stream comprising hydrogen under reducing conditions at a total pressure not greater than 690 kPaa, (100 psia) until the hydrogen halide in the gas flow after contact with the catalyst falls to a partial pressure below 51.7 Paa (0.0075 psia).

2. A process according to claim 1 wherein step (a) is performed at a temperature of from 400 - 550°C and/or a pressure of from sub-atmospheric to 2.07 MPaa (300 psia) and/or an oxygen partial pressure not more than 69 kPaa (10 psia).

3. A process according to claim 1 or 2 wherein in step (a), contacting is continued until the gaseous stream after contact with the catalyst has a carbon dioxide partial pressure below 69 Paa (0.01 psia).

4. A process according to any preceding claim wherein the gaseous stream in step (a) additionally comprises water and/or a source of halogen.

5. A process according to any preceding claim wherein step (a) is performed in a first stage (a1) and a second stage (a2), wherein (i) stage (a1) is performed at a lower temperature than stage (a2) and/or (ii) the gaseous stream of stage (a1) has a lower oxygen concentration than that of stage (a2).

6. A process according to any preceding claim wherein step (b) is performed at an oxygen partial pressure not greater than 69 kPaa (10 psia) and/or a water partial pressure not greater than 20.7 kPaa (3 psia) and/or a halogen source partial pressure prior to contact with the catalyst of not less than 138 Paa (0.02 psia) and/or a total pressure of not more than 2.07 MPaa (300 psia).

7. A process according to any preceding claim wherein in step (b), contacting is continued until the gaseous stream after contact with the substantially decoked catalyst has a halogen partial pressure of at least 69 Paa (0. 01 psia).

8. A process according to any preceding claim wherein step (c) is performed at a total pressure of from sub-atmospheric to 448 kPaa (65 psia).

9. A process according to any preceding claim wherein in step (c), contacting is continued until the hydrogen halide partial pressure is less than 10.3 Paa (0.0015 psia), preferably less than 4.8 Paa (0.0007 psia).

10. A process according to any preceding claim wherein the gaseous stream in step (c) additionally comprises water and/or is performed at an oxygen partial pressure not greater than 31 kPaa (4.5 psia).

11. A process according to any preceding claim wherein step (d) is performed at a temperature of from 300 to 400°C and/or a hydrogen partial pressure greater than 103 Paa (0.015 psia) and/or with the additional presence of water in the gaseous stream.

12. A process according to any preceding claim wherein step (d) is performed at a total pressure not greater than 448 kPaa (65 psia), preferably from sub-atmospheric to 448 kPaa (65 psia).

13. A process according to any preceding claim wherein in step (a) and/or step (b) at least a portion of the gaseous stream after contact with the catalyst is recycled to the respective step, and/or in step (c) and/or (d) none of the gaseous stream after contact with the catalyst is recycled to the respective step.

14. A process according to any preceding claim wherein between steps (a) and (b) there is performed an intermediate reducing step (a') comprising contacting the substantially decoked catalyst with a gaseous stream comprising inert gas and hydrogen under reducing conditions for a time effective to reduce the metal component of the catalyst to the metallic state.

15. A process according to claim 14 wherein step (a') is performed at a hydrogen partial pressure greater than 103 Paa (0.015 psia) and/or a temperature of from 300 - 550°C and/or a total pressure not greater than 2.07 MPaa (300 psia) and/or with the additional presence of water in the gaseous stream.

16. A process according to any preceding claim wherein between steps (a) and (b) there is performed a catalyst conditioning step (a'') comprising contacting the catalyst with a gaseous stream comprising inert gas, oxygen and water under conditions and for a time to saturate the catalyst with water and form a substantially water saturated catalyst.

17. A process according to claim 16 wherein the substantially saturated catalyst has a moisture content in equilibrium with the gaseous stream of step (a'').

18. A process according to claim 16 or 17 wherein step (a'') is performed at a temperature of from 300 - 550°C and/or a water partial pressure not greater than 20.7 kPaa (3 psia) and/or an oxygen partial pressure not greater than 69 kPaa (10 psia) and/or a total pressure not greater than 2.07 MPaa (300 psia).

19. A process according to any preceding claim wherein between steps (b) and (c) there is performed a cooling step (b') comprising contacting the oxyhalogenated catalyst of step (b) with a gaseous stream comprising inert gas and/or oxygen and/or water and/or a source of halogen, preferably the gaseous stream of step (b), which gaseous stream is at a temperature effective to reduce the temperature of the catalyst to a value of from 300 to 400°C.

20. A process according to any preceding claim wherein the reforming catalyst comprises a type L zeolite optionally containing potassium or barium as exchangeable cations and/or the Group VIII catalytic metal comprises platinum and/or the Group VIII metal is present as from 0.05 to 6 wt% of the catalyst, which optionally comprises a binder.

## Patentansprüche

1. Verfahren zum Regenerieren eines desaktivierten Reformierkatalysators oder eines Reformierkatalysators mit niedriger Aktivität, der ein katalytisches Gruppe VIII Metall und Zeolith umfaßt, bei dem
(a) Koks von dem Katalysator abgebrannt wird, indem der Katalysator mit einem gasförmigen Strom, der Inertgas und Sauerstoff umfaßt, unter Oxidationsbedingungen kontaktiert wird, um den Katalysator im wesentlichen zu entkoken,
(b) das Metall des im wesentlichen entkokten Katalysators halogeniert wird, indem der Katalysator mit einem gasförmigen Strom, der Inertgas, Sauerstoff, Wasser und eine Halogenquelle umfaßt, unter Oxyhalogenierungsbedingungen, die eine Temperatur von 450°C bis 550°C umfassen, kontaktiert wird, um Halogenkomplexe zu bilden und das katalytische Metall zu dispergieren,
(c) mindestens ein Teil des Halogens von dem Metall entfernt wird, indem der halogenierte Katalysator mit einem gasförmigen Strom, der Inertgas und Sauerstoff umfaßt, unter Halogenentfernungsbedingungen bei einer Temperatur von 300°C bis 400°C und einem Gesamtdruck von nicht mehr als 690 kPaa (100 psia) kontaktiert wird, bis der Halogenwasserstoff in dem gasförmigen Strom nach Kontakt mit dem Katalysator auf einen Partialdruck unter 20,7 Paa (0,003 psia) absinkt, und
(d) mindestens ein Teil des als Halogenkomplex vorliegenden Metalls in dem Katalysator zum metallischen Zustand reduziert wird, indem der halogenierte Katalysator aus Stufe (c) mit einem gasförmigen Strom, der Wasserstoff umfaßt, unter reduzierenden Bedingungen bei einem Gesamtdruck von nicht mehr als 690 kPaa (100 psia) kontaktiert wird, bis der Halogenwasserstoff in dem Gasstrom nach Kontakt mit dem Katalysator auf einen Partialdruck unter 51,7 Paa (0,0075 psia) absinkt.

2. Verfahren nach Anspruch 1, bei dem Stufe (a) bei einer Temperatur von 400 bis 550°C und/oder einem Druck von unter atmosphärischem Druck liegendem Druck bis 2,07 MPaa (300 psia) und/oder einem Sauerstoff-Partialdruck von nicht mehr als 69 kPaa (10 psia) durchgeführt wird.

3. Verfahren nach Anspruch 1 oder 2, bei dem das Kontaktieren in Stufe (a) fortgesetzt wird, bis der gasförmige Strom nach Kontakt mit dem Katalysator einen Kohlendioxid-Partialdruck unter 69 Paa (0,01 psia) aufweist.

4. Verfahren nach einem der vorhergehenden Ansprüche, bei dem der gasförmige Strom in Stufe (a) zusätzlich Wasser und/oder eine Halogenquelle umfaßt.

5. Verfahren nach einem der vorhergehenden Ansprüche, bei dem Stufe (a) in einer ersten Stufe (a1) und einer zweiten Stufe (a2) durchgeführt wird, wobei (i) Stufe (a1) bei einer niedrigeren Temperatur als Stufe (a2) durchgeführt wird und/oder (ii) der gasförmige Strom in Stufe (a1) eine niedrigere Sauerstoffkonzentration aufweist als der in Stufe (a2).

6. Verfahren nach einem der vorhergehenden Ansprüche, bei dem Stufe (b) bei einem Sauerstoff-Partialdruck von nicht mehr als 69 kPaa (10 psia) und/oder einem Wasser-Partialdruck von nicht mehr als 20,7 kPaa (3 psia) und/oder einem Partialdruck der Halogenquelle vor Kontakt mit dem Katalysator von nicht weniger als 138 Paa (0,02 psia) und/oder einem Gesamtdruck von nicht mehr als 2,07 MPaa (3900 psia) durchgeführt wird.

7. Verfahren nach einem der vorhergehenden Ansprüche, bei dem das Kontaktieren in Stufe (b) fortgesetzt wird, bis der gasförmige Strom nach Kontakt mit dem im wesentlichen entkokten Katalysator einen Halogen-Partialdruck von mindestens 69 Paa (0,01 psia) aufweist.

8. Verfahren nach einem der vorhergehenden Ansprüche, bei dem Stufe (c) bei einem Gesamtdruck von unter atmosphärischem Druck liegendem Druck bis 448 kPaa (65 psia) durchgeführt wird.

9. Verfahren nach einem der vorhergehenden Ansprüche, bei dem das Kontaktieren in Stufe (c) fortgesetzt wird, bis der Halogenwasserstoff-Partialdruck weniger als 10,3 Paa (0,0015 psia) und vorzugsweise weniger als 4,8 Paa (0,0007 psia) beträgt.

10. Verfahren nach einem der vorhergehenden Ansprüche, bei dem der gasförmige Strom in Stufe (c) zusätzlich Wasser umfaßt und/oder bei einem Sauerstoff-Partialdruck von nicht mehr als 31 kPaa (4,5 psia) durchgeführt wird.

11. Verfahren nach einem der vorhergehenden Ansprüche, bei dem Stufe (d) bei einer Temperatur von 300 bis 400°C und/oder einem Wasserstoff-Partialdruck von mehr als 103 Paa (0,015 psia) und/oder in zusätzlicher Gegenwart von Wasser in dem gasförmigen Strom durchgeführt wird.

12. Verfahren nach einem der vorhergehenden Ansprüche, bei dem Stufe (d) bei einem Gesamtdruck von nicht mehr als 448 kPaa (65 psia), vorzugsweise von unter atmosphärischem Druck liegendem Druck bis 448 kPaa (65 psia), durchgeführt wird.

13. Verfahren nach einem der vorhergehenden Ansprüche, bei dem in Stufe (a) und/oder Stufe (b) mindestens ein Teil des gasförmigen Stroms nach Kontakt mit dem Katalysator in die jeweilige Stufe zurückgeführt wird und/oder in Stufe (c) und/oder (d) nichts von dem gasförmigen Strom nach Kontakt mit dem Katalysator in die jeweilige Stufe zurückgeführt wird.

14. Verfahren nach einem der vorhergehenden Ansprüche, bei dem zwischen den Stufen (a) und (b) eine Zwischenreduktionsstufe (a') durchgeführt wird, in der der im wesentlichen entkokte Katalysator mit einem gasförmigen Strom, der Inertgas und Wasserstoff umfaßt, unter Reduktionsbedingungen während einer Zeitdauer kontaktiert wird, die zum Reduzieren der Metallkomponente des Katalysators zum metallischen Zustand wirksam ist.

15. Verfahren nach Anspruch 14, bei dem Stufe (a') bei einem Wasserstoff-Partialdruck von mehr als 103 Paa (0,015 psia) und/oder einer Temperatur von 300 bis 550°C und/oder einem Gesamtdruck von nicht mehr als 2,07 MPaa (300 psia) und/oder in zusätzlicher Gegenwart von Wasser in dem gasförmigen Strom durchgeführt wird.

16. Verfahren nach einem der vorhergehenden Ansprüche, bei dem zwischen den Stufen (a) und (b) eine Katalysatorkonditionierungsstufe (a'') durchgeführt wird, in der der Katalysator mit einem gasförmigen Strom, der Inertgas, Sauerstoff und Wasser umfaßt, unter Bedingungen und während einer Zeitdauer kontaktiert wird, um den Katalysator mit Wasser zu sättigen und einen im wesentlichen mit Wasser gesättigten Katalysator herzustellen.

17. Verfahren nach Anspruch 16, bei dem der im wesentlichen gesättigte Katalysator einen Feuchtigkeitsgehalt im Gleichgewicht mit dem gasförmigen Strom der Stufe (a'') hat.

18. Verfahren nach Anspruch 16 oder 17, bei dem Stufe (a'') bei einer Temperatur von 300 bis 550°C und/oder einem Wasser-Partialdruck von nicht mehr als 20,7 kPaa (3 psia) und/oder einem Sauerstoff-Partialdruck von nicht mehr als 69 kPaa (10 psia) und/oder einem Gesamtdruck von nicht mehr als 2,07 MPaa (300 psia) durchgeführt wird.

19. Verfahren nach einem der vorhergehenden Ansprüche, bei dem zwischen den Stufen (b) und (c) eine Abkühlungsstufe (b') durchgeführt wird, in der der oxyhalogenierte Katalysator von Stufe (b) mit einem gasförmigen Strom, der Inertgas und/oder Sauerstoff und/oder Wasser und/oder eine Halogenquelle umfaßt, vorzugsweise mit dem gasförmigen Strom von Stufe (b), kontaktiert wird, wobei der gasförmige Strom eine Temperatur aufweist, die zur Verminderung der Temperatur des Katalysators auf einen Wert von 300 bis 400°C wirksam ist.

20. Verfahren nach einem der vorhergehenden Ansprüche, bei dem der Reformierkatalysator einen Zeolith L umfaßt, der gegebenenfalls Kalium oder Barium als austauschbare Kationen enthält, und/oder das katalytische Gruppe VIII Metall Platin umfaßt und/oder das Gruppe VIII Metall in einer Menge von 0,05 bis 6 Gew.% des Katalysators, der gegebenenfalls ein Bindemittel umfaßt, vorhanden ist.

## Revendications

1. Procédé de régénération d'un catalyseur de reformage désactivé ou de faible activité comprenant un métal catalytique du Groupe VIII et une zéolite, lequel procédé comprend :
(a) le fait d'éliminer le coke du catalyseur par combustion en mettant le catalyseur en contact avec un courant gazeux comprenant un gaz inerte et de l'oxygène dans des conditions d'oxydation pour éliminer pratiquement le coke du catalyseur ;
(b) le fait d'halogéner le métal du catalyseur dont le coke a été pratiquement éliminé en mettant le catalyseur en contact avec un courant gazeux comprenant un gaz inerte, de l'oxygène, de l'eau et une source d'halogène dans des conditions d'oxyhalogénation comprenant une température de 450 °C à 550 °C pour complexer avec un halogène et disperser le métal catalytique ;
(c) le fait d'éliminer au moins une partie de l'halogène du métal en mettant le catalyseur halogéné en contact avec un courant gazeux comprenant un gaz inerte et de l'oxygène dans des conditions d'élimination de l'halogène à une température de 300 °C à 400 °C et sous une pression totale non supérieure à 690 kPa absolus (100 psia), jusqu'à ce que la pression partielle de l'halogénure d'hydrogène présent dans le courant gazeux après contact avec le catalyseur s'abaisse à une valeur inférieure à 20,7 Pa absolus (0,003 psia) ; et
(d) le fait de réduire au moins une partie du métal complexé par l'halogène présent dans le catalyseur à l'état métallique en mettant le catalyseur halogéné provenant de l'étape (c) en contact avec un courant gazeux comprenant de l'hydrogène dans des conditions réductrices sous une pression totale non supérieure à 690 kPa absolus (100 psia) jusqu'à ce que la pression partielle de l'halogénure d'hydrogène présent dans le courant gazeux après contact avec le catalyseur s'abaisse à une valeur inférieure à 51,7 Pa absolus (0,0075 psia).

2. Procédé selon la revendication 1, dans lequel l'étape (a) est effectuée à une température de 400 à 550 °C et/ou sous une pression allant d'une pression inférieure à la pression atmosphérique à 2,07 MPa absolus (300 psia) et/ou sous une pression partielle d'oxygène non supérieure à 69 kPa absolus (10 psia).

3. Procédé selon les revendications 1 ou 2, dans lequel, dans l'étape (a), la mise en contact est poursuivie jusqu'à ce que le courant gazeux, après contact avec le catalyseur, ait une pression partielle de dioxyde de carbone inférieure à 69 Pa absolus (0,01 psia).

4. Procédé selon l'une quelconque des revendications précédentes, dans lequel le courant gazeux de l'étape (a) comprend en outre de l'eau et/ou une source d'halogène.

5. Procédé selon l'une quelconque des revendications précédentes, dans lequel l'étape (a) est effectuée en une première étape (a1) et une seconde étape (a2), dans lequel (i) l'étape (a1) est effectuée à une température inférieure à l'étape (a2) et/ou (ii) le courant gazeux de l'étape (a1) a une concentration en oxygène plus faible que celle de l'étape (a2).

6. Procédé selon l'une quelconque des revendications précédentes, dans lequel l'étape (b) est effectuée sous une pression partielle d'oxygène non supérieure à 69 kPa absolus (10 psia) et/ou sous une pression partielle d'eau non supérieure à 20,7 kPa absolus (3 psia) et/ou sous une pression partielle de la source d'halogène, avant le contact avec le catalyseur non inférieure à 138 Pa absolus (0,02 psia) et/ou sous une pression totale non supérieure à 2,07 MPa absolus (300 psia).

7. Procédé selon l'une quelconque des revendications précédentes, dans lequel, dans l'étape (b), la mise en contact est poursuivie jusqu'à ce que le courant gazeux, après contact avec le catalyseur pratiquement débarrassé de son coke, ait une pression partielle d'halogène d'au moins 69 Pa absolus (0,01 psia).

8. Procédé selon l'une quelconque des revendications précédentes, dans lequel l'étape (c) est effectuée sous une pression totale allant d'une pression inférieure à la pression atmosphérique à 448 kPa absolus (65 psia).

9. Procédé selon l'une quelconque des revendications précédentes, dans lequel dans l'étape (c), la mise en contact est poursuivie jusqu'à ce que la pression partielle de l'halogénure d'hydrogène soit inférieure à 10,3 Pa absolus (0,0015 psia), de préférence inférieure à 4,8 Pa absolus (0,0007 psia).

10. Procédé selon l'une quelconque des revendications précédentes, dans lequel le courant gazeux de l'étape (c) comprend en outre de l'eau et/ou est effectué sous une pression partielle d'oxygène non supérieure à 31 kPa absolus (4,5 psia).

11. Procédé selon l'une quelconque des revendications précédentes, dans lequel l'étape (d) est effectuée à une température de 300 à 400 °C et/ou sous une pression partielle d'hydrogène supérieure à 103 Pa absolus (0,015 psia) et/ou avec la présence supplémentaire d'eau dans le courant gazeux.

12. Procédé selon l'une quelconque des revendications précédentes, dans lequel l'étape (d) est effectuée sous une pression totale non supérieure à 448 kPa absolus (65 psia), de préférence sous une pression allant d'une pression inférieure à la pression atmosphérique à 448 kPa absolus (65 psia).

13. Procédé selon l'une quelconque des revendications précédentes, dans lequel, dans l'étape (a) et/ou dans l'étape (b), au moins une partie du courant gazeux après contact avec le catalyseur est recyclée dans l'étape respective et/ou dans l'étape (c) et/ou (d), aucune partie du courant gazeux, après contact avec le catalyseur n'est recyclée dans l'étape respective.

14. Procédé selon l'une quelconque des revendications précédentes, dans lequel entre les étapes (a) et (b), on effectue une étape de réduction intermédiaire (a') comprenant la mise en contact du catalyseur pratiquement débarrassé de son coke avec un courant gazeux comprenant un gaz inerte et de l'hydrogène dans des conditions de réduction, pendant un temps efficace pour réduire le constituant métallique du catalyseur à l'état métallique.

15. Procédé selon la revendication 14, dans lequel l'étape (a') est effectuée sous une pression partielle d'hydrogène supérieure à 103 Pa absolus (0,015 psia) et/ou à une température de 300 à 550 °C et/ou sous une pression totale non supérieure à 2,07 MPa absolus (300 psia) et/ou avec la présence supplémentaire d'eau dans le courant gazeux.

16. Procédé selon l'une quelconque des revendications précédentes, dans lequel, entre les étapes (a) et (b), on effectue une étape de conditionnement (a'') comprenant la mise en contact du catalyseur avec un courant gazeux comprenant un gaz inerte, de l'oxygène et de l'eau dans des conditions et pendant un temps permettant de saturer d'eau le catalyseur et de former un catalyseur pratiquement saturé d'eau.

17. Procédé selon la revendication 16, dans lequel le catalyseur pratiquement saturé a une teneur en humidité en équilibre avec le courant gazeux de l'étape (a'').

18. Procédé selon les revendications 16 ou 17, dans lequel l'étape (a'') est effectuée à une température de 300 à 550 °C et/ou sous une pression partielle d'eau non supérieure à 20,7 kPa absolus (3 psia) et/ou sous une pression partielle d'oxygène non supérieure à 69 kPa absolus (10 psia) et/ou sous une pression totale non supérieure à 2,07 MPa absolus (300 psia).

19. Procédé selon l'une quelconque des revendications précédentes, dans lequel, entre les étapes (b) et (c), on effectue une étape de refroidissement (b') comprenant la mise en contact du catalyseur oxyhalogéné de l'étape (b) avec un courant gazeux comprenant un gaz inerte et/ou de l'oxygène et/ou de l'eau et/ou une source d'halogène, de préférence le courant gazeux de l'étape (b), lequel courant gazeux est à une température efficace pour réduire la température du catalyseur à une valeur de 300 à 400 °C.

20. Procédé selon l'une quelconque des revendications précédentes, dans lequel le catalyseur de reformage comprend une zéolite du type L contenant facultativement du potassium ou du baryum comme cations échangeables et/ou le métal catalytique du Groupe VIII comprend du platine et/ou le métal du Groupe VIII est présent à raison de 0,05 à 6 % en poids du catalyseur, qui comprend facultativement un liant.
